# DEMANDE DE BREVET EUROPEEN

(11) **EP 1 103 174 A1**
(43) Date de publication de la demande: **30.05.2001**
(21) Numéro de dépôt: 99500227.6
(22) Date de dépôt: 25.11.1999
(51) Int. Cl.: A01C 11/00, A01C 7/00

(54) **Planteuse de vigne**

(71) Demandeur: Sanz Tolsa, Ismael, 46635 Valencia (ES)
(72) Inventeur: Sanz Tolsa, Ismael, 46635 Valencia (ES)
(74) Mandataire: Primo de Rivera y Urquijo, Jose Antonio

(57) **Abrégé**

La présente invention, planteuse de vigne, est destinée principalement à la plantation de vigne, bien qu'elle puisse être utilisée pour la plantation d'autres espèces, avec une grande capacité de plantation journalière, conditionnée par les conditions de dureté du terrain. La planteuse dispose d'un nombre déterminé de déchausseuses (9,10) qui réalisent les ornes dans lesquels les plantes seront plantées plus tard et arrosées, en réalisant en une seule fois les opérations de défrichage en profondeur, de plantation et d'arrosage.

## Description

### OBJET DE L'INVENTION

La présente invention, planteuse de vigne, est destinée principalement à la plantation de vigne, bien qu'elle puisse être utilisée pour la plantation d'autres espèces, avec une grande capacité de plantation journalière, conditionnée par les conditions de dureté du terrain. La planteuse dispose d'un nombre déterminé de déchausseuses qui réalisent les ornes dans lesquels les plantes seront plantées plus tard et arrosées.

L'invention préconisée solutionne les problèmes qui existent à l'heure actuelle pour la préparation des sols de culture au moment de préparer la terre et de la planter en même temps avec les espèces sélectionnées, en économisant les biens matériels et humains.

### DESCRIPTION DE L'ETAT DE LA TECHNIQUE

L'invention, planteuse de vigne, est destinée non seulement à la plantation mais aussi à la préparation du sol pour planter ensuite. La préparation du sol a comme objectifs les points suivants, augmenter la capacité de rétention d'eau, faciliter l'absorption des éléments nutritifs par la racine, faciliter le développement radical, aussi bien en profondeur que latéralement, augmenter la filtration de l'eau de pluie dans le sol et réduire l'écoulement superficiel et la vitesse de la lame versante de l'eau, et donc freiner l'érosion du sol.

La procédure à utiliser pour la préparation du sol est conditionnée par divers facteurs comme le sont l'ensemencement ou la plantation, la texture du sol, l'état d'humidité du terrain, l'effet hydrologique, l'effet sur le paysage, la facilité plus ou moins grande d'opérer (pierre pentes excessives, etc.) et l'impact écologique.

Pour réaliser la préparation mentionnée du sol de manière à ce que les facteurs précédents soient satisfaits, il faut réaliser un labour profond dans le sol de culture. Le labour profond dans la préparation du sol est dû au fait qu'en général il y a une couche endurcie à la profondeur jusqu'à laquelle les labourages continus sont arrivés, il faut donc rompre cette couche pour que la croissance postérieure de la plantation soit optimale. Ce labour profond est composé surtout par le défrichage en profondeur du sol, celui-ci pouvant être linéaire ou plein, et qui consiste à réaliser des ornes distancés dans le sol et d'une profondeur variable entre 20 et 100 cm. Ce labour est normalement réalisés avec des outils agricoles pour défrichage en profondeur et selon les lignes de niveau et après cette opération on procède à la plantation de l'espèce à cultiver. Ce labour est nécessaire car il améliore la capacité de rétention de l'eau et la vitesse d'infiltration dans les ornes en favorisant le développement des plantes outre le fait de créer une protection naturelle pour les plantes grâce aux latéraux des ornes, tout en les protégeant aussi bien du vent que du soleil.

Après avoir réalisé ces opérations séparément, tout d'abord le défrichage en profondeur du sol et ensuite la plantation, il faut arroser les plantes pour leur croissance, ce qui oblige à réaliser un troisième passage sur le champ de culture pour arroser chaque unité plantée.

Il est évident qu'effectuer trois opérations indépendantes sur un champ de culture non seulement prolonge le travail de plantation mais aussi nécessite trois dispositifs, chacun d'entre eux avec une fonction différente ce qui augmente donc la machinerie à stocker ainsi que le coût de maintenance et de réparation.

### DESCRIPTION

La planteuse de vigne est formée par un châssis qui est uni à l'élément tracteur, normalement un tracteur avec des caractéristiques de puissance déterminées. Ce dit châssis dispose d'un nombre déterminé de taupes ou déchausseuses qui sont introduites dans le sol ou bien par un système hydraulique ou bien par un système manuel. Ces déchausseuses sont séparées par une distance déterminée qui déterminera la séparation entre les ornes.

Pour maintenir constante cette séparation entre les ornes, la planteuse de vigne dispose de deux marqueurs hydrauliques, lesquels depuis leur position presque verticale descendent jusqu'à se situer dans une position horizontale au sol et avec le marqueur proprement dit perpendiculaire à ce dernier et chaque marqueur en se déplaçant trace un petit orne qui sert à signaler les lignes suivantes de plantation.

Sur le châssis reposent, outre les déchausseuses et le marqueur, un nombre de sièges, le même nombre que de déchausseuses, destinés à héberger le même nombre d'ouvriers. La mission de ces ouvriers est de fournir la plante à la machine laquelle, à son tour, la place dans le fonds de l'orne et la plante reste ainsi plantée.

De cette façon le terrain a été préparé pour la plantation et en plus les plantes ont aussi été plantées et il ne reste donc qu'à arroser l'orne créé par la déchausseuse et hébergeant la plante. Pour cela, la planteuse de vigne dispose d'un réservoir à eau, situé sur la partie avant du tracteur, équipé d'une pompe électrique et qui est chargé de pomper l'eau, en graduant sa quantité, jusqu'à l'orne après que la plante ait été placée. Comme on peut le vérifier, trois opérations ont été réalisées d'un seul coup, la terre préparée dans des conditions optimales, la plante placée et de plus la plantation arrosée.

Les déchausseuses ou taupes sont formés par deux planches en fer situées en V et avec une déchausseuse proprement dit (élément chargé de pénétrer la terre et de commencer l'orne) sur le côté commun aux deux planches. Les déchausseuses sont situées sur la partie inférieure de la poutre principale du châssis, pouvant donc monter ou descendre, en fonction de la profondeur désirée du défrichage en profondeur ou de la situation de la planteuse, c'est à dire, en fonctionnement ou en état de repos.

Sur la poutre principale du châssis, et sur la partie supérieure, se trouvent les marqueurs des lignes de plantation, un à chaque extrémité, qui sont formés par un bras articulé lequel, en position de repos, se trouve élevé presque perpendiculaire à la poutre du châssis et fixé au châssis, non seulement à travers l'articulation mais aussi à travers un cylindre d'actionnement hydraulique. Ces cylindres, un pour chaque marqueur, sont à fonctionnement indépendant et ce sont eux qui sont chargés d'élever ou de descendre le marqueur. Ces marqueurs disposent, sur l'extrémité libre des bras articulés, du marqueur proprement dit qui forme un angle droit avec le bras et qui a son extrémité libre et courbée.

Les sièges des ouvriers se trouvent situés entre deux déchausseuses et ils sont unis à la poutre principale du châssis et à sa même hauteur, les taupes se trouvant en dessous. Les sièges sont proches des déchausseuses afin que l'ouvrier puisse introduire entre les deux planches en V la plante et de cette façon qu'elle reste plantée. Entre les sièges il existe un espace où seront placées les plantes avant d'être plantées.

Le réservoir à eau est situé ou bien sur la partie avant du tracteur ou bien sur la poutre principale du châssis, entre les appuis des cylindres hydrauliques, et il comporte des conduits qui mènent l'eau jusqu'à la taupe ou déchausseuse. La pompe de ce réservoir peut être contrôlée par les ouvriers chargés de la plantation ou par le conducteur du tracteur, qui régulera la quantité d'eau à fournir à chaque orne.

Le fonctionnement de la planteuse de vigne est simple, après l'avoir placée sur la partie postérieure du tracteur, on descend le châssis depuis sa position la plus haute et on dépose les unités de l'espèce végétale à planter entre les deux sièges des ouvriers, dans l'espace destiné à leur stockage pendant l'opération. Les ouvriers se situent ensuite chacun sur son propre siège et le châssis est élevé pour que le tracteur commence son parcours à un point concret du terrain à planter. Après avoir atteint ce point, le châssis descend jusqu'à ce que la déchausseuse et les planches en V se trouvent à la profondeur désirée, variable en fonction du type de préparation de terrain dont on a besoin, et le tracteur commence à se déplacer. Auparavant on aura actionné un ou les deux bras hydrauliques des marqueurs de ligne, en fonction de si le tracteur se trouve sur un point limite du terrain ou dans un endroit situé à l'intérieur du terrain.

Après avoir mis le tracteur en marche, les ouvriers des sièges commencent à prendre les plantes et à les introduire dans les ornes réalisés à travers les planches en V, de cette façon elles sont plantées correctement et arrosées par l'eau en provenance du réservoir de la planteuse de vigne.

De cette manière, les problèmes posés préalablement sont résolus et sont satisfaits grâce à la présente invention, la planteuse de vignes.

### DESCRIPTION DES FIGURES

Para faciliter la compréhension de la planteuse de vigne, deux figures sont jointes à la présente sollicitude de patente dont la finalité est la meilleure compréhension des fondements sur lesquels est basée l'invention qui nous occupe et la meilleure compréhension de la description d'une forme préférante de réalisation en tenant compte du fait que le caractère des figures est illustratif et non limitatif.

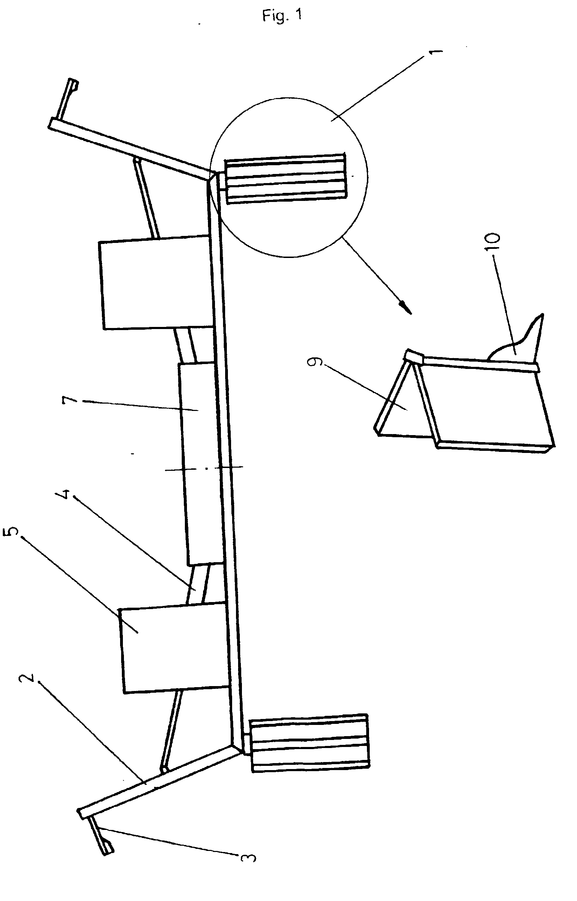

La figure 1 représente une vue de la partie postérieure de la planteuse de vigne, ainsi qu'un détail de la déchausseuse.

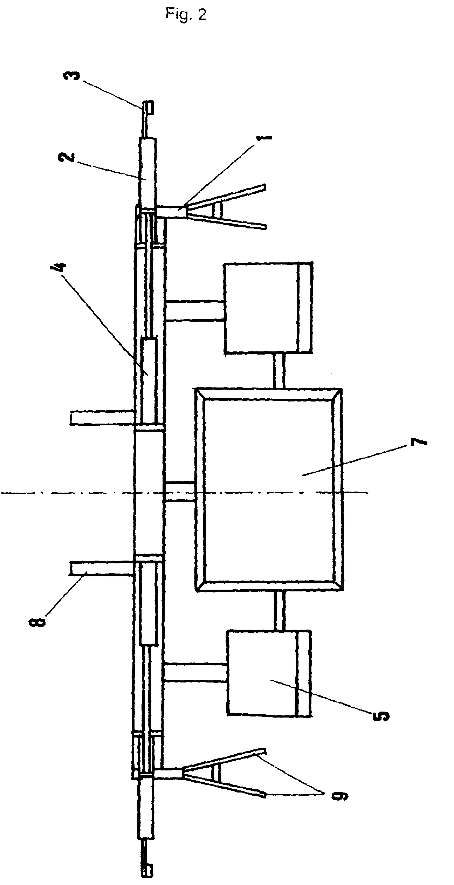

La figure 2 représente une vue supérieure de la présente invention.

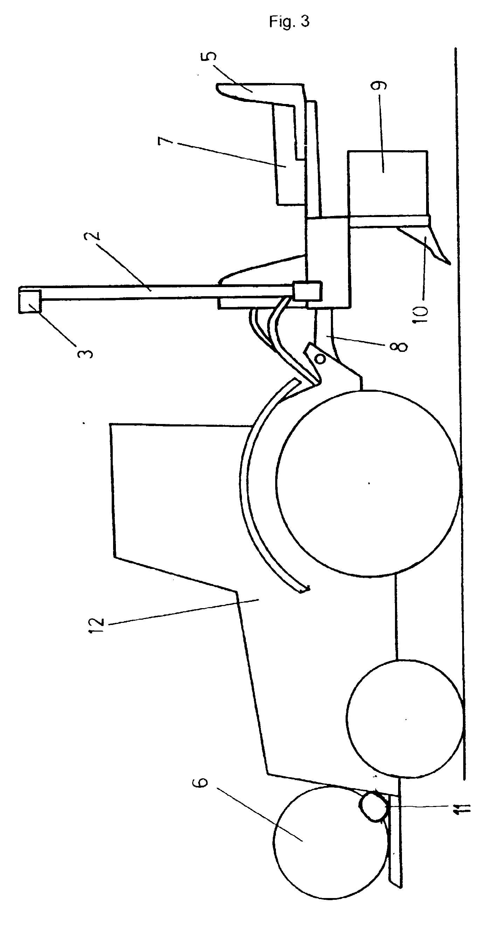

La figure 3 représente une vue latérale de la planteuse de vigne disposée sur le tracteur.

### DESCRIPTION D'UNE FORME PREFERANTE DE REALISATION

La présente invention, planteuse de vigne, est destinée spécialement à la plantation de vignes, bien qu'elle puisse être utilisée pour un autre type d'espèce végétale, et en même temps qu'elle plante, elle est capable de défricher en profondeur le terrain et d'arroser l'espèce qui vient d'être plantée.

Pour obtenir ce qui vient d'être mentionné, on situe la planteuse de vigne sur la partie arrière d'un tracteur (12) disposant de la puissance suffisante pour entraîner la planteuse avec les déchausseuses (1) complètement cachées dans la terre. Après l'avoir située sur la partie arrière (8) et après avoir réalisées les connexions nécessaires, spécialement celles qui se réfèrent au système d'arrosage et aux marqueurs hydrauliques, la machine est prête à réaliser ses fonctions.

Les ouvriers doivent déposer les plantes qui vont être plantées dans le container de plantes (7) situé entre les deux sièges (5) sur lesquels les ouvriers chargés de la plantation vont s'asseoir. Les deux ouvriers prennent place et alors la planteuse commence à descendre jusqu'à ce que les déchausseuses (1) restent cachées ou ce qui est la même chose jusqu'à ce que la partie supérieure des planches (9) soit à la hauteur de la superficie du terrain. Le conducteur du tracteur fait descendre à ce moment-là un ou les deux bras articulés des marqueurs hydrauliques (2) par action des cylindres hydrauliques (4) existants, de telle façon que les lignes suivantes de plantation restent déterminées grâce aux marqueurs (3) qui existent sur les extrémités des bras (2), assurant ainsi la même distance de séparation entre les rangées de plantation, cette distance pouvant varier entre deux et trois mètres.

Le tracteur (12) est prêt à commencer son parcours de plantation, sur lequel la planteuse de vigne défrichera en profondeur, tracera l'orne pour la plantation, plantera l'espèce végétale sélectionnée et arrosera ce qui vient juste d'être planté, tout cela en une seule fois, pouvant planter de cette façon jusqu'à 10.000 plantes par jour en fonction de la dureté du terrain.

Les déchausseuses (1 ) sont formées par deux planches en fer (9) de 50 cm de large par 60 cm de haut et dont l'objectif principal est de réaliser les ornes dans la terre, en pouvant ouvrir des sillons sur n'importe quel type de terrains, qu'ils soient durs ou mous, mais avant de réaliser l'orne, la taupe (10), ou déchausseuse proprement dit, rompt les couches profondes du terrain de telle manière que les caractéristiques du terrain sont améliorées. Ce labour de défrichage en profondeur est nécessaire du fait qu'il améliore la capacité de rétention d'eau et la vitesse d'infiltration dans les ornes favorisant le développement des plantes et de plus il facilite la création postérieure de l'orne de plantation qui sert en outre de protection naturelle pour les plantes grâce aux latéraux des ornes, tout en les protégeant aussi bien du vent que du soleil.

Une fois en mouvement, les deux ouvriers situés sur leurs sièges respectifs (5), devront prendre les plantes de leur container (7) et introduire la plante entre les deux planches (9) en fer, de telle façon que la plante reste parfaitement plantée et placée dans l'orne. En suivant cette procédure il est possible de réaliser deux des trois étapes que la planteuse de vigne est capable de réaliser.

La troisième étape c'est l'arrosage de l'orne qui vient d'être planté, obtenu grâce à la conduite d'eau depuis le réservoir (6), situé sur la partie avant du tracteur, jusqu'à la déchausseuse (1), réservoir avec une capacité de stockage entre 1000 et 1500 litres. L'eau est impulsée jusqu'à la planteuse grâce à l'action d'une pompe de 12 volts, la quantité d'eau impulsée pouvant être graduée. L'eau est conduite à travers des conduits de la partie avant du tracteur jusqu'à la partie inférieure des deux planches (9) d'où elle est expulsée à la terre au fur et à mesure que s'effectuent les plantations.

## Revendications

1. Planteuse de vigne, pour plantation de vigne et de tout autre type de plante, constituée par un châssis doté de moyens d'ancrages pour être accroché à la partie arrière d'un tracteur, lequel dispose d'un ensemble de moyens qui comprend un système de signalisation, des déchausseuses pour effectuer en une seule fois l'orne ou les ornes et les moyens d'arrosage connectés à un réservoir d'eau, étant caractérisé en ce que sur le dit châssis un nombre déterminé de déchausseuses sont disposées, deux marqueurs de signalisation de la ligne de plantation, le même nombre de sièges que de déchausseuses et un réservoir d'eau connecté aux moyens d'arrosage, le dit châssis étant capable d'être élevé et descendu jusqu'au niveau du sol.

2. Planteuse de vigne, selon la première revendication, caractérisée en ce que les déchausseuses précédentes se trouvent formées par deux planches de matériel résistant situées en formant un angle aigu pour effectuer le défrichage en profondeur du terrain en créant des ornes et en facilitant la plantation de l'espèce végétal sélectionnée, tout en étant, en outre, doté d'un élément pointu sur l'extrémité inférieure de la droite d'union des deux planches, appelé déchausseuse, pour rupture des couches inférieures du terrain.

3. Planteuse de vigne selon les revendications précédentes, caractérisée en ce que les marqueurs mentionnés de signalisation de la ligne de plantation se trouvent constitués par des tiges indicatrices, actionnées à travers des cylindres hydrauliques indépendants disposés sur l'ensemble, leur longueur variant grâce à leur propre oscillation, actionnée manuellement ou hydrauliquement.

4. Planteuse de vigne, selon les revendications précédentes, caractérisée en ce qu'elle dispose du même nombre de sièges pour les ouvriers que le nombre de déchausseuses, définissant sur le châssis, un espace de travail des ouvriers pour fournir la plante à la machine à travers les planches qui existent dans les déchausseuses.

5. Planteuse de vigne selon les revendications précédentes, caractérisée en ce qu'elle se trouve dotée d'un réservoir à eau, situé sur le tracteur qui transporte la planteuse de vigne ou bien sur la même planteuse, actionné par une pompe électrique et connecté aux dits moyens d'arrosage équipé de système de régulation de la quantité d'eau.

6. Planteuse de vigne, selon les revendications précédentes, caractérisée en ce qu'elle dispose d'autant de déchausseuses que de lignes à pouvoir planter simultanément.
